# EUROPEAN PATENT APPLICATION

(11) **EP 3 950 595 A1**
(43) Date of publication of application: **09.02.2022**
(21) Application number: 20776859.9
(22) Date of filing: 04.02.2020
(51) Int. Cl.: C01G 9/02

(54) **COMPOSITE MEMBER, AND CONSTRUCTION MEMBER AND DECORATION MEMBER USING SAME**

(30) Priority: 26.03.2019 JP 2019059086
(71) Applicant: Panasonic Intellectual Property Management Co., Ltd., Osaka-shi, Osaka 540-6207 (JP)
(72) Inventor: KURIZOE, Naoki, Osaka-shi, Osaka 540-6207 (JP); OKUNO, Tatsuya, Osaka-shi, Osaka 540-6207 (JP); SATO, Natsuki, Osaka-shi, Osaka 540-6207 (JP)
(74) Representative: Müller-Boré & Partner Patentanwälte PartG mbB
(86) International application number: PCT/JP2020/004112
(87) International publication number: WO 2020/195182

(57) **Abstract**

A composite member (100) includes a matrix part (10) including an inorganic substance, and an organic dye (20) present in a dispersed state inside the matrix part (10). The composite member (100) has a porosity of 20% or less in a section of the matrix part (10). A construction member and a decoration member each include the composite member.

## Description

### TECHNICAL FIELD

The present invention relates to a composite member, and a construction member and a decoration member each using the composite member.

### BACKGROUND ART

Coloring of an inorganic member made from ceramics or glass has been performed to provide the inorganic member with design features. One method for coloring the inorganic member is to disperse an inorganic pigment made from an inorganic compound inside the inorganic member. Although inorganic pigments are highly durable, they cannot express a wide variety of colors due to their lack of color variations and have poor design features.

Another method for coloring the inorganic member is to apply a coloring agent containing an organic dye made from an organic compound on the surface of the inorganic member to form a colored film. Since organic dyes have more color variations than inorganic pigments, they can express a variety of colors and enhance design features. However, organic dyes easily deteriorate by light, heat, or oxygen and lack long-term stability compared with inorganic pigments, and thus their use is limited.

To enhance the durability of organic dyes, Patent Literature 1 discloses an organic pigment colored glass with a protective film provided on a surface of a colored film containing an organic pigment. Specifically, Patent Literature 1 discloses an organic pigment colored glass formed by stacking a colored film made from an inorganic oxide as a matrix component in which an organic pigment as a coloring component is dispersed, and an inorganic oxide film as a protective film on the surface of a glass substrate. Patent Literature 1 discloses that stacking the protective film made from an inorganic oxide on the surface of the colored film improves film strength of the colored film, compensates differences in practical strength due to the type of the organic pigment used, and provides glass with various colored films easy to recycle.

### CITATION LIST

### PATENT LITERATURE

Patent Literature 1: Japanese Unexamined Patent Application Publication No. 2001-270742

### SUMMARY OF INVENTION

The organic pigment colored glass in Patent Literature 1 has the protective film formed by a sol-gel method. Specifically, the protective film is formed by applying a coating liquid for the protective film, which is a mixture of a metal alkoxide, water, an acid catalyst, and a solvent, to the glass substrate on which the colored film is formed, and then drying and heat-treating the glass substrate. The protective film obtained thus contains an organic component and deteriorates by long-term use, so that the organic pigment comes into contact with the atmosphere, resulting in oxidative deterioration. Further, there is a difference in the thermal expansion coefficient between the glass substrate, and the colored film and the protective film, and thus the colored film and the protective film are peeled off from the glass substrate by long-term use. Further, the sol-gel method only obtains a protective film having a thin film thickness, and the protective film is peeled off or cracked by a physical force, such as friction, so that the organic pigment comes into contact with the atmosphere, resulting in oxidative deterioration.

The present invention has been made in consideration of such issues as described above, which are inherent in related art. An object of the present invention is to provide a composite member that is stable for a long time when an organic dye is used and has a wide variety of colors, and a construction member and a decoration member each using the composite member.

To solve the above-described issues, a composite member according to a first aspect of the present invention includes a matrix part including an inorganic substance, and an organic dye present in a dispersed state inside the matrix part, wherein the composite member has a porosity of 20% or less in a section of the matrix part.

A construction member according to a second aspect of the present invention includes the above-described composite member.

A decoration member according to a third aspect of the present invention includes the above-described composite member.

### BRIEF DESCRIPTION OF DRAWINGS

[Fig. 1] Fig. 1 is a schematic sectional view of an example of a composite member according to a present embodiment.
[Fig. 2] Fig. 2(a) is an enlarged schematic sectional view of the composite member according to the present embodiment. Fig. 2(b) is a schematic sectional view of the vicinity of grain boundaries of a particle group of an inorganic substance.
[Fig. 3] Fig. 3 is a schematic sectional view of another example of the composite member according to the present embodiment.
[Fig. 4] Fig. 4 is a schematic sectional view of another example of the composite member according to the present embodiment.
[Fig. 5] Fig. 5 is a diagram illustrating a back-scattered electron image at position 1 in a test sample according to an example.
[Fig. 6] Fig. 6 is a diagram illustrating a back-scattered electron image at position 2 in the test sample according to the example.
[Fig. 7] Fig. 7 is a diagram illustrating a back-scattered electron image at position 3 in the test sample according to the example.
[Fig. 8] Fig. 8 is a diagram illustrating binarized data of the back-scattered electron image at position 1 in the test sample according to the example.
[Fig. 9] Fig. 9 is a diagram illustrating binarized data of the back-scattered electron image at position 2 in the test sample according to the example.
[Fig. 10] Fig. 10 is a diagram illustrating binarized data of the back-scattered electron image at position 3 in the test sample according to the example.
[Fig. 11] Fig. 11 is a graph illustrating an X-ray diffraction pattern of hydraulic alumina used in a reference example and patterns of boehmite (AlOOH) and gibbsite (Al(OH)₃) registered in the ICSD.
[Fig. 12] Fig. 12 is a graph illustrating an X-ray diffraction pattern of a test sample of the reference example and X-ray diffraction patterns of boehmite and gibbsite registered in the ICSD.

### DESCRIPTION OF EMBODIMENTS

A detailed description is given below of a composite member according to the present embodiment, and a construction member and a decoration member each using the composite member. Note that dimensional ratios in the drawings are exaggerated for convenience of explanation and are sometimes different from actual ratios.

### [Composite member]

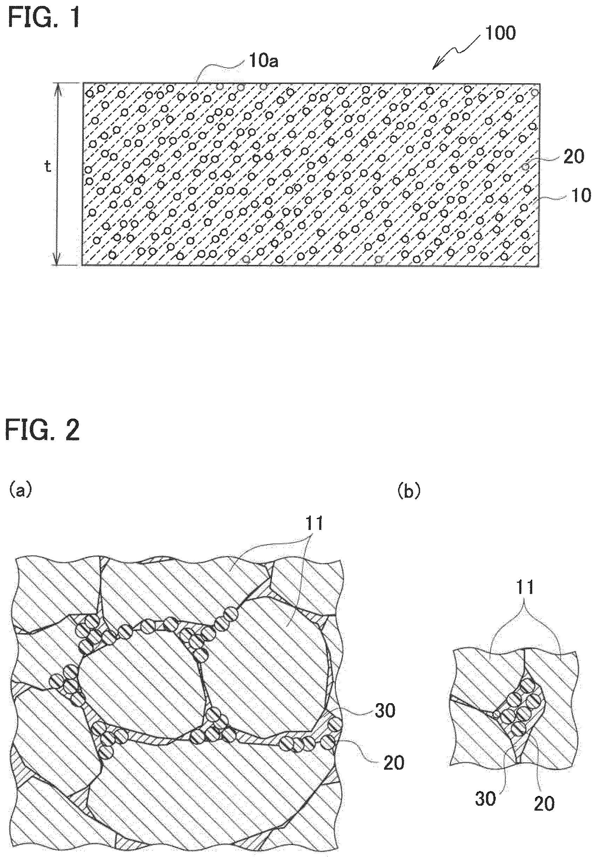

As illustrated in Fig. 1, a composite member 100 according to the present embodiment includes a matrix part 10 made from an inorganic substance and an organic dye 20 present in a dispersed state within the matrix part 10. As illustrated in Fig. 2, the matrix part 10 includes multiple particles 11 made from the inorganic substance, and the particles 11 of the inorganic substance bond with each other to form the matrix part 10.

Preferably, the inorganic substance making up the matrix part 10 contains at least one metal element selected from the group consisting of an alkali metal, an alkaline earth metal, a transition metal, a base metal, and a semimetal. In this description, the alkaline earth metal includes beryllium and magnesium in addition to calcium, strontium, barium, and radium. The base metal includes aluminum, zinc, gallium, cadmium, indium, tin, mercury, thallium, lead, bismuth, and polonium. The semimetal includes boron, silicon, germanium, arsenic, antimony, and tellurium. Among these, preferably, the inorganic substance contains at least one metal element selected from the group consisting of zinc, aluminum, and magnesium. As is described later, the inorganic substance containing the metal element described above can easily form a connection part derived from the inorganic substance by a pressure heating method.

Preferably, the inorganic substance contains at least one selected from the group consisting of an oxide, a nitride, a hydroxide, a sulfide, a boride, a carbide, and a halide of the above-described metal element. More preferably, the inorganic substance contains at least one selected from the group consisting of an oxide, a nitride, a hydroxide, a sulfide, a boride, a carbide, and a halide of the above-described metal element, as a main component. That is, preferably, the inorganic substance contains at least one selected from the group consisting of an oxide, a nitride, a hydroxide, a sulfide, a boride, a carbide, and a halide of the above-described metal element in an amount of 50 mol% or more, more preferably, in an amount of 80 mol% or more. Note that the oxide of the above-described metal element includes a phosphate, a silicate, an aluminate, and a borate in addition to a compound in which only oxygen is bonded to the metal element. Preferably, the inorganic substance is an oxide or a nitride of the above-described metal element. Such an inorganic substance has high stability against oxygen and water vapor in the atmosphere. Accordingly, dispersing the organic dye 20 inside the matrix part 10 prevents contact of the organic dye 20 with oxygen and water vapor and thus reduces deterioration of the organic dye 20.

Particularly preferably, the inorganic substance making up the matrix part 10 is an oxide. When the inorganic substance is made from an oxide of the above-described metal element, the composite member 100 with higher durability is obtained compared to each case of a fluoride and a nitride. Note that, preferably, the oxide of the metal element is a compound in which only oxygen is bonded to the metal element.

Preferably, the inorganic substance making up the matrix part 10 is a polycrystalline substance. That is, preferably, the particles 11 of the inorganic substance are crystalline particles, and preferably, the matrix part 10 is formed by aggregating a large number of particles 11. When the inorganic substance making up the matrix part 10 is a polycrystalline substance, the composite member 100 with higher durability is obtained compared to the case where the inorganic substance is made from an amorphous substance. Note that, more preferably, the particles 11 of the inorganic substance are crystalline particles containing at least one metal element selected from the group consisting of an alkali metal, an alkaline earth metal, a transition metal, a base metal, and a semimetal. Preferably, the particles 11 of the inorganic substance are crystalline particles containing at least one selected from the group consisting of an oxide, a nitride, a hydroxide, a sulfide, a boride, a carbide, and a halide of the above-described metal element. More preferably, the particles 11 of the inorganic substance are crystalline particles containing at least one selected from the group consisting of an oxide, a nitride, a hydroxide, a sulfide, a boride, a carbide, and a halide of the above-described metal element, as a main component.

Preferably, the inorganic substance making up the matrix part 10 is boehmite. Boehmite is an aluminum oxide hydroxide represented by a composition formula of AlOOH. Boehmite is insoluble in water and hardly reacts with acids and alkalis at room temperature, having high chemical stability. Boehmite also has excellent heat resistance due to its high dehydration temperature of around 500 °C. Since boehmite has the specific gravity of about 3.07, when the matrix part 10 is made from boehmite, the composite member 100 that is lightweight and excellent in chemical stability is obtained.

When the inorganic substance making up the matrix part 10 is boehmite, the particles 11 may be particles only of a boehmite phase, or particles of a mixed phase of boehmite, and aluminum oxide or aluminum hydroxide other than boehmite. For example, the particles 11 may be a mixture of a phase of boehmite and a phase of gibbsite (Al(OH)₃).

The average particle size of the particles 11 of the inorganic substance making up the matrix part 10 is not limited, but is more preferably 300 nm or more and 30 µm or less, still more preferably 300 nm or more and 10 µm or less, particularly preferably 300 nm or more and 5 µm or less. When the average particle size of the particles 11 of the inorganic substance is within this range, the particles 11 firmly bond with each other, increasing the strength of the matrix part 10. When the average particle size of the particles 11 of the inorganic substance is within this range, the percentage of pores present inside the matrix part 10 is 20% or less, which reduces the deterioration of the organic dye 20, as described later. In this description, the value of "average particle size" is, unless otherwise stated, a value calculated as an average value of particle size of particles observed in several to several tens of visual fields by using observation means, such as a scanning electron microscope (SEM) or a transmission electron microscope (TEM).

The shape of the particles 11 of the inorganic substance is not limited, but may be spherical, for example. The particles 11 may be whisker-like (acicular) particles or scale-like particles. The whisker-like particles or the scale-like particles have higher contact with other particles compared to the spherical particles, which easily improves the strength of the matrix part 10. Therefore, using particles of such a shape for the particles 11 enhances the strength of the entire composite member 100. As the particles 11, which are whisker-like, for example, particles containing at least one selected from the group consisting of aluminum nitride (AlN), zinc oxide (ZnO), and aluminum oxide (Al₂O₃) can be used. As the particles 11, which are scale-like, particles containing boron nitride (BN) can be used.

Preferably, the inorganic substance making up the matrix part 10 has translucency. Specifically preferably, the inorganic substance transmits visible light. When the inorganic substance has translucency, the organic dye 20 easily selectively absorbs light of a specific wavelength, and thus the composite member 100 easily reproduces the color of the organic dye 20. As is described later, when the organic dye 20 is a fluorescent dye, the composite member 100 emits a fluorescent color emitted from the organic dye 20.

Here, preferably, the inorganic substance making up the matrix part 10 does not substantially contain hydrates. In this description, "an inorganic substance does not substantially contain hydrates" means that the inorganic substance does not intentionally contain hydrates. Therefore, when a hydrate is incorporated into the inorganic substance as an unavoidable impurity, the condition "an inorganic substance does not substantially contain hydrates" is satisfied. Note that since boehmite is a metal oxide hydroxide, boehmite is not included in hydrates in this description.

Note that preferably, the inorganic substance making up the matrix part 10 does not contain a hydrate of a calcium compound. The calcium compound here is tricalcium silicate (alite, 3CaO·SiO₂), dicalcium silicate (belite, 2CaO·SiO₂), calcium aluminate (3CaO·Al₂O₃), calcium aluminoferrite (4CaO·Al₂O₃·Fe₂O₃), or calcium sulfate (CaSO₄·2H₂O). When the inorganic substance making up the matrix part 10 contains a hydrate of the above-described calcium compound, the composite member obtained may have a porosity in the section of the matrix part exceeding 20%. Thus, preferably, the inorganic substance does not contain the above-described hydrated calcium compound. Preferably, the inorganic substance making up the matrix part 10 does not contain phosphate cement, zinc phosphate cement, and calcium phosphate cement. When the inorganic substance does not contain these cements, the porosity of the composite member obtained is reduced to 20% or less.

Preferably, the organic dye 20 dispersed inside the matrix part 10 is a dye made from an organic compound and having a maximum absorption wavelength in the range of 400 nm to 650 nm. More preferably, the organic dye 20 is a dye having a maximum absorption wavelength in the range of 450 nm to 650 nm. Preferably, the organic dye 20 is at least one selected from the group consisting of an azo dye, a phthalocyanine dye, a tetraazaporphyrin dye, and a porphyrin dye. Examples of the phthalocyanine dye include C.I. Direct Blue 86, 87, 189, 199, and C.I. Acid Blue 249. Examples of the tetraazaporphyrin dye include TAP-2, TAP-18, and TAP-45 (manufactured by YAMADA CHEMICAL CO., LTD.). Examples of the porphyrin dye include 5, 10, 15, 20-tetraphenyl-21H, 23H-porphyrin (manufactured by WAKO CHEMICAL, CO., LTD.).

Preferably, the organic dye 20 is a fluorescent dye. When a fluorescent dye is used as the organic dye 20, fluorescence is emitted from the organic dye 20, so that the composite member 100 usable as an optical member is obtained. As such a fluorescent dye, a dye made from an organic compound and emitting fluorescence can be used. More preferably, as the fluorescent dye, a dye made from an organic compound with conjugated π electrons and emitting fluorescence is used. Still more preferably, the fluorescent dye has a maximum absorption wavelength in the range of 400 nm to 650 nm. Preferably, the fluorescent dye is at least one selected from the group consisting of a perylene fluorescent dye, a coumarin fluorescent dye, a pyridine fluorescent dye, an imidazole fluorescent dye, an oxadiazole fluorescent dye, an oxazine fluorescent dye, a DCJTB fluorescent dye, and a rhodamine fluorescent dye.

Examples of the perylene fluorescent dye include C.I. Solvent Green 5 (green), C.I. Solvent Orange 55 (orange), C.I. Solvent Red 135, 179, C.I. Pigment Red 123, 149, 166, 178, 179, 190, 194, 224 (red), C.I. Pigment Violet 29 (purple), and C.I. Pigment Black 31, 32 (black). Examples of the coumarin fluorescent dye include 3-thienoylcoumarin, 3-(4-methoxybenzoyl) coumarin, 3-benzoylcoumarin, 3-(4-cyanobenzoyl) coumarin, 3-thienoyl-7-methoxycoumarin, 7-methoxy-3-(4-methoxybenzoyl) coumarin, and 3-benzoyl-7-methoxycoumarin. Examples of the pyridine fluorescent dye include 1-ethyl-2-[4-(p-dimethylaminophenyl)-1,3-butadienyl] pyridinium-perchlorate. Examples of the oxadiazole fluorescent dye include 2-phenyl-5-(4-biphenylyl)-1,3,4-oxadiazole. Examples of the oxazine fluorescent dye include 3-nitrophenoxazine, and 3,7-dinitrophenoxazine. Examples of the DCJTB fluorescent dye include 4-(dicyanomethylene)-2-tert-butyl-6-(1,1,7,7-tetramethyljulolidine-4-yl-vinyl)-4H-pyran. Examples of the rhodamine fluorescent dye include rhodamine B, rhodamine 6G, rhodamine 3B, rhodamine 101, rhodamine 110, sulforhodamine, basic violet 11, and basic red 2.

Preferably, the matrix part 10 includes a group of particles of an inorganic substance in the composite member 100. That is, preferably, the matrix part 10 includes the multiple particles 11 made from the inorganic substance, and the particles 11 of the inorganic substance bond with each other to form the matrix part 10. In this case, the particles 11 may be in point contact with each other, or in surface contact with each other by particle surfaces of the particles 11. Preferably, the organic dye 20 is present in an approximately uniformly dispersed state inside the matrix part 10. However, preferably, the organic dye 20 is present at grain boundaries of the particles 11 of the inorganic substance. As illustrated in Fig. 2, by unevenly distributing the organic dye 20 among adjacent inorganic particles 11, the composite member 100 is obtained that has a different color appearance compared to a state in which the organic dye 20 is approximately uniformly dispersed.

When the matrix part 10 includes the group of particles of the inorganic substance in the composite member 100, the organic dye 20 may be present among adjacent particles 11 of the inorganic substance. However, as illustrated in Fig. 2, in addition to the organic dye 20, there may be an amorphous part 30 containing an amorphous inorganic compound among the adjacent particles 11 of the inorganic substance. The presence of the amorphous part 30 allows the adjacent particles 11 of the inorganic substance to bond with each other via the amorphous part 30, further increasing the strength of the matrix part 10. Note that preferably, the amorphous part 30 is present to contact at least surfaces of the particles 11 of the inorganic substance. The amorphous part 30 may be present between the particles 11 of the inorganic substance and the organic dye 20 and among the adjacent organic dye 20 in addition to among the adjacent particles 11 of the inorganic substance.

Preferably, the amorphous part 30 contains an amorphous inorganic compound. Specifically, the amorphous part 30 may be a part made of only the amorphous inorganic compound or a mixture of the amorphous inorganic compound and a crystalline inorganic compound. The amorphous part 30 may be a part in which the crystalline inorganic compound is dispersed inside the amorphous inorganic compound. When the amorphous inorganic compound and the crystalline inorganic compound are mixed, the amorphous inorganic compound and the crystalline inorganic compound may have the same chemical composition or may have different chemical compositions from each other.

Preferably, the particles 11 of the inorganic substance and the amorphous part 30 contain the same metal element, and preferably, the metal element is at least one selected from the group consisting of an alkali metal, an alkaline earth metal, a transition metal, a base metal, and a semimetal. That is, preferably, the inorganic compound making up the particles 11 and the amorphous inorganic compound making up the amorphous part 30 contain at least the same metal element. The inorganic compound making up the particles 11 and the amorphous inorganic compound making up the amorphous part 30 may have the same chemical composition or may have different chemical compositions. Specifically, when the metal element is zinc, the inorganic compound making up the particles 11 and the amorphous inorganic compound making up the amorphous part 30 may both be zinc oxide (ZnO). Alternatively, while the inorganic compound making up the particles 11 is ZnO, the amorphous inorganic compound making up the amorphous part 30 may be a zinc-containing oxide other than ZnO.

In the composite member 100, preferably, the particles 11 and the amorphous part 30 contain an oxide of at least one metal element selected from the group consisting of an alkali metal, an alkaline earth metal, a transition metal, a base metal, and a semimetal. Since the oxide of such a metal element has high durability, contact of the organic dye 20 with oxygen and water vapor is prevented for a long time, and deterioration of the organic dye 20 is reduced.

Preferably, the oxide of the metal element contained in both the particles 11 and the amorphous part 30 is at least one selected from the group consisting of zinc oxide, magnesium oxide, and a composite of zinc oxide and magnesium oxide. As is described later, by using these oxides of the metal element, the amorphous part 30 is formed by a simple method.

In the composite member 100, the particles 11 and the amorphous part 30 may contain a nitride of at least one metal element selected from the group consisting of an alkali metal, an alkaline earth metal, a transition metal, a base metal, and a semimetal. Since the nitride of such a metal element also has high durability, contact of the organic dye 20 with oxygen and water vapor is prevented for a long time, and deterioration of the organic dye 20 is reduced. Examples of the nitride of the metal element contained in both the particles 11 and the amorphous part 30 include boron nitride (BN).

As described above, the inorganic substance making up the matrix part 10 may be boehmite. In this case, the particles 11 of the matrix part 10 may be particles only of a boehmite phase, or particles of a mixed phase of boehmite, and aluminum oxide or aluminum hydroxide other than boehmite. In this case, preferably, the adjacent particles 11 are bonded through at least one of an oxide or an oxide hydroxide of aluminum. That is, preferably, the particles 11 are not bonded by an organic binder of an organic compound and are not also bonded by an inorganic binder of an inorganic compound except for an oxide and an oxide hydroxide of aluminum. Note that when the adjacent particles 11 are bonded through at least one of an oxide or an oxide hydroxide of aluminum, the oxide and the oxide hydroxide of aluminum may be crystalline, or amorphous.

Note that when the matrix part 10 is made from boehmite, the presence ratio of the boehmite phase is preferably 50% by mass or more, more preferably 60% by mass or more, still more preferably 70% by mass or more. By increasing the ratio of the boehmite phase, the matrix part 10 that is lightweight and excellent in chemical stability and heat resistance is obtained. Note that the ratio of the boehmite phase in the matrix part 10 is obtained by measuring the X-ray diffraction pattern of the matrix part 10 by an X-ray diffraction method and then performing a Rietveld analysis.

In the composite member 100, preferably, the porosity in the section of the matrix part 10 is 20% or less. That is, when the section of the matrix part 10 is observed, preferably, the average value of the percentage of pores per unit area is 20% or less. When the porosity is 20% or less, the organic dye 20 is sealed inside the dense inorganic substance. Thus, the ratio of the organic dye 20 contacting with oxygen and water vapor from the outside of the composite member 100 decreases, which reduces the oxidative decomposition of the organic dye 20 and maintains the color of the organic dye 20 for a long time. The porosity in the section of the matrix part 10 is preferably 15% or less, more preferably 10% or less, still more preferably 5% or less. As the porosity in the cross section of the matrix part 10 is smaller, the contact of the organic dye 20 with oxygen and water vapor is more prevented, which reduces the deterioration of the organic dye 20.

In this description, the porosity is determined as follows. First, the section of the matrix part 10 is observed to discriminate the matrix part 10, the organic dye 20, and the pores. Then, the unit area and the area of pores in that unit area are measured to obtain the ratio of pores per unit area. After the ratio of pores per unit area is obtained at multiple locations, the average value of the ratio of pores per unit area is taken as the porosity. Note that when the section of the matrix part 10 is observed, an optical microscope, a scanning electron microscope (SEM), or a transmission electron microscope (TEM) can be used. The unit area and the area of pores in that unit area may be measured by binarizing an image observed with a microscope.

The shape of the composite member 100 is not limited, but may be, for example, a plate shape. A thickness t of the composite member 100 (matrix part 10) is not limited, but may be, for example, 100 µm or more. As described above, the colored film of Patent Literature 1 is formed by a sol-gel method, and thus only a thin film of 500 nm or less is obtained. However, the composite member 100 according to the present embodiment is formed by a pressure heating method, as described later. Thus, the composite member 100 having a large thickness is easily obtained. The thickness t of the composite member 100 (matrix part 10) may be 0.5 mm or more. The thickness t of the composite member 100 (matrix part 10) may be 1 cm or more. The upper limit of the thickness t of the composite member 100 (matrix part 10) is not limited, but may be, for example, 50 cm.

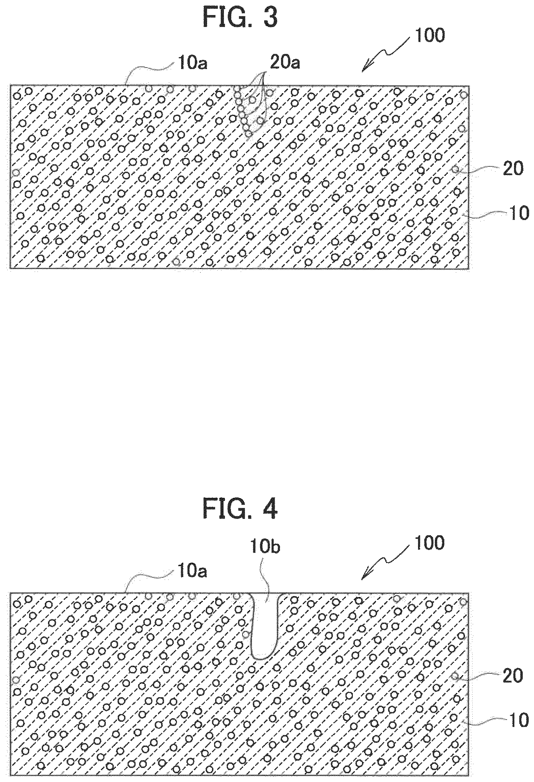

In the composite member 100, preferably, the organic dye 20 is not continuously present from a surface 10a of the matrix part 10 to the inside of the matrix part 10 and is not present in the form of a film on the surface 10a of the matrix part 10. Specifically, preferably, the organic dye 20 is present in a dispersed state inside the matrix part 10. A part of the organic dye 20 may be segregated inside the matrix part 10. However, preferably, an organic dye 20a segregated is not continuously present from the surface 10a to the inside of the matrix part 10 as illustrated in Fig. 3. The organic dye 20a present on the surface 10a of the matrix part 10 may deteriorate by contact with oxygen and water vapor in the atmosphere. The organic dye 20a continuously present from the surface 10a to the inside of the matrix part 10 may also deteriorate due to the oxidative deterioration of the organic dye 20a present on the surface 10a. Therefore, from the viewpoint of reducing the deterioration of the organic dye 20, preferably, the organic dye 20 is not continuously present from the surface 10a to the inside of the matrix part 10.

With respect to the organic dye 20 dispersed in the matrix part 10, preferably, a part of the organic dye 20 is not present in a film shape on the surface 10a of the matrix part 10. In this case, the organic dye 20 in a film shape may oxidize and deteriorate due to exposure to oxygen and water vapor in the atmosphere.

In the composite member 100, preferably, the matrix part 10 has no gap 10b communicating from the surface 10a to the inside of the matrix part 10. The organic dye 20 inside the matrix part 10 is covered with the particles 11 of the inorganic substance and thus hardly oxidizes and deteriorates. However, as illustrated in Fig. 4, when the gap 10b is present in the matrix part 10, oxygen and water vapor may reach the inside of the matrix part 10 through the gap 10b and may contact with the organic dye 20 inside the matrix part 10. Thus, from the viewpoint of reducing the oxidative deterioration of the organic dye 20, preferably, the matrix part 10 does not have the gap 10b communicating from the surface 10a to the inside.

As described above, the composite member 100 according to the present embodiment includes the matrix part 10 made from an inorganic substance and the organic dye 20 present in a dispersed state inside the matrix part 10, and the porosity in the section of the matrix part 10 is 20% or less. The composite member 100 using the organic dye can express various colors compared to using an inorganic pigment, enhancing design features. Since the organic dye 20 is highly dispersed in the matrix part 10, the entire composite member 100 develops color. Thus, when the composite member 100 is processed, the color tone of the composite member 100 is maintained. In contrast, in the case of the colored film provided on the surface of the glass substrate as in Patent Literature 1, surface processing is not possible because the colored film is removed when the surface is processed.

The composite member 100 has the porosity of 20% or less in the section. Thus, the ratio of the organic dye 20 contacting with oxygen and water vapor decreases, which reduces the oxidative decomposition of the organic dye 20 and maintains the color of the composite member 100 for a long time. Since the matrix part 10 has few internal pores and the inorganic substance is dense, the composite member 100 is a ceramic member having high strength.

As described above, the colored glass of Patent Literature 1 may have the colored film peeled off due to the difference in the thermal expansion coefficient between the glass substrate and the colored film. However, the composite member 100 has the organic dye 20 highly dispersed in the matrix part 10, having no peeling issue and maintaining high stability for a long time.

Next, a method for manufacturing the composite member 100 according to the present embodiment is described. The composite member 100 is manufactured by pressurizing and heating a mixture of particles of an inorganic substance and an organic dye in a state containing a solvent. By using such a pressure heating method, a part of the inorganic substance is eluted, and the inorganic substance is bonded to each other, forming the matrix part 10 with the organic dye 20 dispersed therein.

Specifically, first, an inorganic substance powder and an organic dye powder are mixed to prepare a mixed powder. The method for mixing the inorganic substance powder and the organic dye powder is not limited and may be carried out by a dry or wet process. The inorganic substance powder and the organic dye powder may be mixed in air or in an inert atmosphere.

Next, a solvent is added to the mixed powder. The solvent is not limited, but for example, one dissolving a part of the inorganic substance when the mixed powder is pressurized and heated can be used. As the solvent, one reacting with the inorganic substance to form another inorganic substance different from said inorganic substance can be used. As such a solvent, at least one selected from the group consisting of an acidic aqueous solution, an alkaline aqueous solution, water, an alcohol, a ketone, and an ester can be used. As the acidic aqueous solution, an aqueous solution with a pH of 1 to 3 can be used. As the alkaline aqueous solution, an aqueous solution with a pH of 10 to 14 can be used. As the acidic aqueous solution, preferably, an aqueous solution of an organic acid is used. As the alcohol, preferably, an alcohol with 1 to 12 carbon atoms is used.

The mixture containing the inorganic substance, the organic dye, and the solvent is prepared by mixing the inorganic substance powder and the organic dye powder, and then adding the solvent, as described above. However, a method for preparing the mixture containing the inorganic substance, the organic dye, and the solvent is not limited to such a method. The method for preparing the mixture includes first mixing the organic dye and the solvent. In this case, the organic dye may or may not be dissolved in the solvent. Then, by adding the inorganic substance powder to the mixture of the organic dye and the solvent, the mixture containing the inorganic substance, the organic dye, and the solvent may be prepared.

The mixture containing the inorganic substance, the organic dye, and the solvent is then filled inside the mold. After filling the mold with the mixture, the mold may be heated as necessary. Then, by applying pressure to the mixture inside the mold, the inside of the mold becomes a high pressure state. At this time, the inorganic substance and the organic dye are densified, and at the same time, particles of the inorganic substance bond with each other.

When a solvent that dissolves a part of an inorganic substance is used, an inorganic compound making up the inorganic substance is dissolved in the solvent under high pressure. The inorganic compound dissolved penetrates a gap between the inorganic substance and the organic dye, a gap among the inorganic substance, and a gap among the organic dye. Then, the solvent in the mixture is removed in this state to form a connection part derived from the inorganic substance between the inorganic substance and the organic dye, among the inorganic substance, and among the organic dye. When a solvent that reacts with an inorganic substance to form another inorganic substance different from said inorganic substance is used, an inorganic compound making up the inorganic substance reacts with the solvent under high pressure. Then, the other inorganic substance generated by the reaction is filled in the gap between the inorganic substance and the organic dye, the gap among the inorganic substance, and the gap among the organic dye to form a connection part derived from the other inorganic substance.

When a solvent that dissolves a part of an inorganic substance is used, heating and pressurizing conditions of the mixture containing the inorganic substance, the organic dye, and the solvent are not limited as long as the conditions are such that dissolution of the surface of the inorganic substance progresses. When a solvent that reacts with an inorganic substance to form another inorganic substance different from said inorganic substance is used, heating and pressurizing conditions of the mixture are not limited as long as the reaction between the inorganic substance and the solvent proceeds. For example, preferably, the mixture containing the inorganic substance, the organic dye, and the solvent is heated to 50 to 300 °C and then pressurized at a pressure of 10 to 600 MPa. Note that the temperature at which the mixture containing the inorganic substance, the organic dye, and the solvent is heated is more preferably 80 to 250 °C, still more preferably 100 to 200 °C. The pressure at which the mixture containing the inorganic substance, the organic dye, and the solvent is pressurized is more preferably 50 to 400 MPa, more preferably 50 to 200 MPa.

Then, by taking out the molded body from the inside of the mold, the composite member 100 is obtained. Note that, preferably, the connection part derived from the inorganic substance formed between the inorganic substance and the organic dye, among the inorganic substance, and among the organic dye is the amorphous part 30 described above.

As a method for producing an inorganic member made from a ceramic, a sintering method has been known. The sintering method is a method for obtaining a sintered body by heating an aggregate of a solid powder made from an inorganic substance at a temperature lower than the melting point. However, in the sintering method, the solid powder is heated to 1000 °C or higher, for example. Therefore, when the sintering method is used to obtain a composite member made from the inorganic substance and the organic dye, the organic dye carbonizes due to heating at a high temperature, obtaining no composite member. However, in the manufacturing method for the composite member 100 according to the present embodiment, the mixture formed by mixing the inorganic substance powder and the organic dye powder is heated at a low temperature of 300 °C or less, and thus the organic dye hardly carbonizes. This enables the organic dye 20 to be stably dispersed inside the matrix part 10 made from the inorganic substance and the matrix part 10 to be colored.

Further, in the manufacturing method according to the present embodiment, since the mixture of the inorganic substance powder and the organic dye powder is pressurized while being heated, the inorganic substance is aggregated to form the matrix part 10 that is dense. As a result, the number of pores inside the matrix part 10 is reduced, and thus the composite member 100 is obtained that has high strength while reducing the oxidative deterioration of the organic dye 20.

Next, a method for manufacturing the composite member 100 is described in which the inorganic substance making up the matrix part 10 is boehmite. The composite member in which the inorganic substance is boehmite is produced by mixing a hydraulic alumina, an organic dye, and a solvent containing water, and then pressurizing and heating the mixture. The hydraulic alumina is an oxide obtained by heat-treating aluminum hydroxide and contains ρ alumina. Such hydraulic alumina has the property of bonding and curing by hydration reaction. Therefore, by using the pressure heating method, the hydration reaction of the hydraulic alumina progresses to have the hydraulic alumina bonded to each other while the crystal structure is changed to boehmite, so that the matrix part 10 is formed.

Specifically, a hydraulic alumina powder, an organic dye, and a solvent containing water are first mixed to prepare a mixture. Preferably, the solvent containing water is pure water or ion exchange water. However, the solvent containing water may contain an acidic substance or an alkaline substance, in addition to water. As long as the solvent containing water contains water as a main component, the solvent containing water may contain, for example, an organic solvent (for example, an alcohol).

Preferably, the amount of the solvent added to the hydraulic alumina is an amount in which the hydration reaction of the hydraulic alumina sufficiently progresses. The amount of the solvent added is preferably 20 to 200% by mass to the hydraulic alumina, more preferably 50 to 150% by mass to the hydraulic alumina.

Next, the mixture formed by mixing the hydraulic alumina, the organic dye, and the solvent containing water is filled inside the mold. After filling the mold with the mixture, the mold may be heated as necessary. By applying pressure to the mixture inside the mold, the inside of the mold becomes a high pressure state. At this time, the hydraulic alumina becomes highly filled, and particles of the hydraulic alumina bond with each other, resulting in high density. Specifically, by adding water to the hydraulic alumina, the hydraulic alumina undergoes a hydration reaction to form boehmite and aluminum hydroxide on the surface of particles of the hydraulic alumina. By pressurizing the mixture in the mold while heating, the boehmite and aluminum hydroxide generated mutually diffuse among adjacent hydraulic alumina particles, so that the hydraulic alumina particles gradually bond with each other. Then, the dehydration reaction proceeds by heating, and the crystal structure changes from aluminum hydroxide to boehmite. It is supposed that the hydration reaction of the hydraulic alumina, the mutual diffusion among the hydraulic alumina particles, and the dehydration reaction proceed almost simultaneously.

When the molded body is taken out from the inside of the mold, the composite member is obtained in which the particles 11 bond with each other via at least one of the oxide or the oxide hydroxide of aluminum, and further the organic dye is dispersed.

Heating and pressurizing conditions of the mixture formed by mixing the hydraulic alumina, the organic dye, and the solvent containing water are not limited as long as the reaction between the hydraulic alumina and the solvent progresses. For example, preferably, the mixture formed by mixing the hydraulic alumina, the organic dye, and the solvent containing water is pressurized at a pressure of 10 to 600 MPa while being heated to 50 to 300 °C. Note that the temperature at which the mixture formed by mixing the hydraulic alumina, the organic dye, and the solvent containing water is heated is more preferably 80 to 250 °C, still more preferably 100 to 200 °C. The pressure at which the mixture formed by mixing the hydraulic alumina, the organic dye, and the solvent containing water is pressurized is more preferably 50 to 600 MPa, still more preferably 200 to 600 MPa.

As described above, the method for producing the composite member 100 includes: a step of mixing an inorganic substance powder with an organic dye powder to obtain a mixture; and a step of adding a solvent dissolving an inorganic substance or a solvent reacting with the inorganic substance to the mixture, and then pressurizing and heating the mixture. Alternatively, the method for producing the composite member 100 includes: a step of mixing an organic dye with a solvent dissolving an inorganic substance or a solvent reacting with the inorganic substance; a step of mixing an inorganic substance powder with the solvent containing the organic dye to obtain a mixture; and a step of pressurizing and heating the mixture. Preferably, heating and pressurizing conditions of the mixture are a temperature of 50 to 300 °C and a pressure of 10 to 600 MPa. In the manufacturing method according to the present embodiment, since the composite member 100 is formed under such a low temperature condition, carbonization of the organic dye 20 is reduced so that a colored ceramic member is obtained.

The method for producing the composite member 100 in which the inorganic substance is boehmite includes: a step of mixing the hydraulic alumina, the organic dye 20, and the solvent containing water to obtain the mixture; and a step of pressurizing and heating the mixture. Preferably, heating and pressurizing conditions of the mixture are a temperature of 50 to 300 °C and a pressure of 10 to 600 MPa. In this manufacturing method, the composite member is formed under such a low temperature condition, and thus the obtained member is mainly made from boehmite phase. Therefore, the composite member that is lightweight and excellent in chemical stability is obtained by a simple method.

### [Construction member and decoration member]

Next, a construction member and a decoration member according to the present embodiment are described.

The construction member according to the present embodiment includes the composite member 100 described above. The construction member is a member manufactured for construction, in which the composite member 100 is used at least partially in the present embodiment. As described above, the composite member 100 can be formed in a plate shape having a large thickness, and is excellent in scratch resistance in addition to high strength and durability. The composite member 100 is cuttable in the same manner as a general ceramic member and maintains the color tone derived from the organic dye 20 when the surface is processed. Therefore, the composite member 100 is suitably usable as a construction member. The construction member is not limited, but for example, an exterior wall material (siding), a roof material, and the like are mentioned. Materials for roads and materials for outer grooves are also mentioned as the construction member.

The decoration member according to the present embodiment includes the above-described composite member 100. The decoration member is a member for imparting an aesthetic appearance to the product, in which the composite member 100 is used at least partially in the present embodiment. The composite member 100 has high strength while being easily processible and is excellent in design features since the whole develops color. Therefore, the composite member 100 is suitably usable as a decoration member. The decoration member is not limited, but for example, tiles, signboards, and the like are mentioned.

### EXAMPLES

The composite member according to the present embodiment is described in more detail with reference to an example and a reference example below, but the present embodiment is not limited thereto.

### [Example]

### (Preparation of test sample)

White zinc oxide particles having an average particle size D₅₀ of about 1 µm (manufactured by Kojundo Chemical Laboratory Co.,Ltd., purity 99.99%) were used as the inorganic particles. A red organic dye of azo dyes (VALIFAST (registered trade mark) RED 3312 manufactured by ORIENT CHEMICAL INDUSTRIES CO., LTD.) was used as the organic dye. Then, 0.78 g (98% by volume) of the zinc oxide particles and 0.0039 g (2% by volume) of the organic dye were wet-mixed with acetone using a mortar and pestle made of agate to obtain a mixed powder.

Next, the mixed powder obtained was put into a cylindrical molding die (ϕ10) having an internal space. Furthermore, 150 µL of 1M acetic acid was added to the mixed powder filled inside the molding die. Then, the test sample of the present example was obtained by heating and pressurizing the mixed powder containing the acetic acid under the condition of 50 MPa, 150 °C, and 20 minutes.

### (Evaluation of test sample)

### <Surface observation>

As a result of visually observing the test sample of the present example, the surface of the test sample showed a red color derived from the organic dye. Further, the test sample of this example had a high hardness like a sintered body.

### <Porosity measurement>

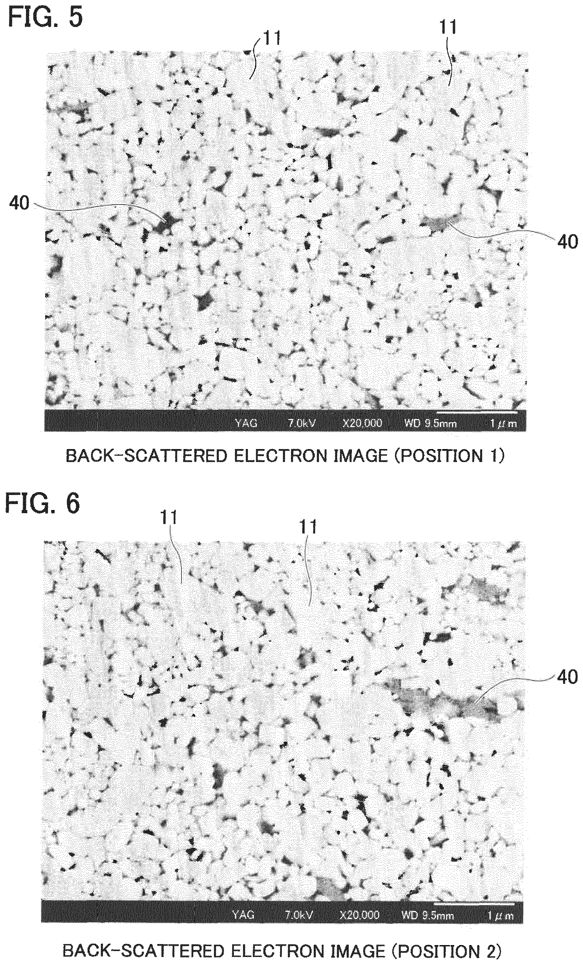

First, cross section polisher processing (CP processing) was applied to the section of the cylindrical test sample. Next, using a scanning electron microscope (SEM), a back-scattered electron image was observed at a magnification of 20,000 on the section of the test sample. Figs 5 to 7 show back-scattered electron images obtained by observing three points (positions 1 to 3) in the section of the test sample. In the observed back-scattered electron images, a white portion indicates zinc oxide (particles 11 of the inorganic substance), a gray portion indicates the organic dye 20, and a black portion indicates a pore 40.

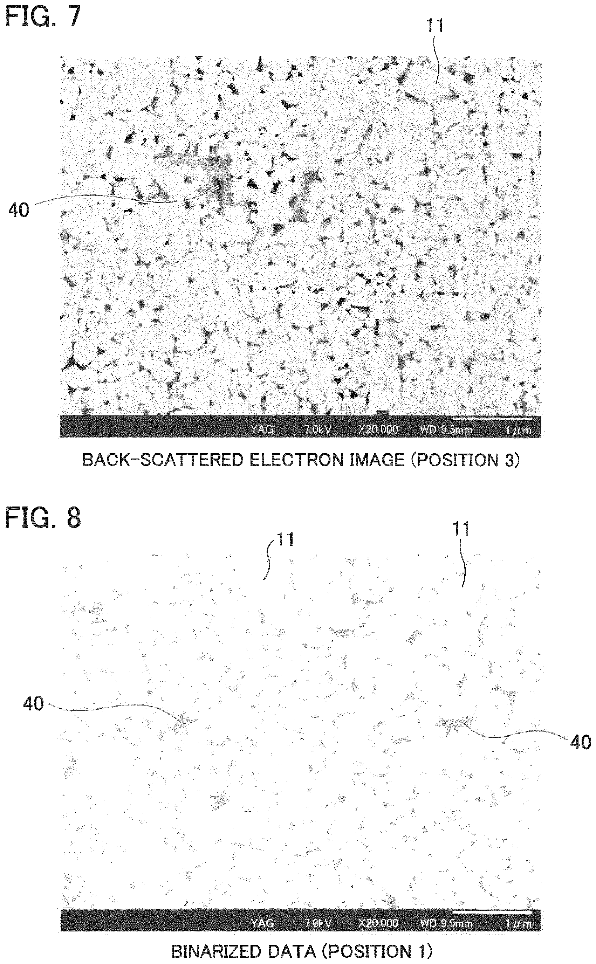

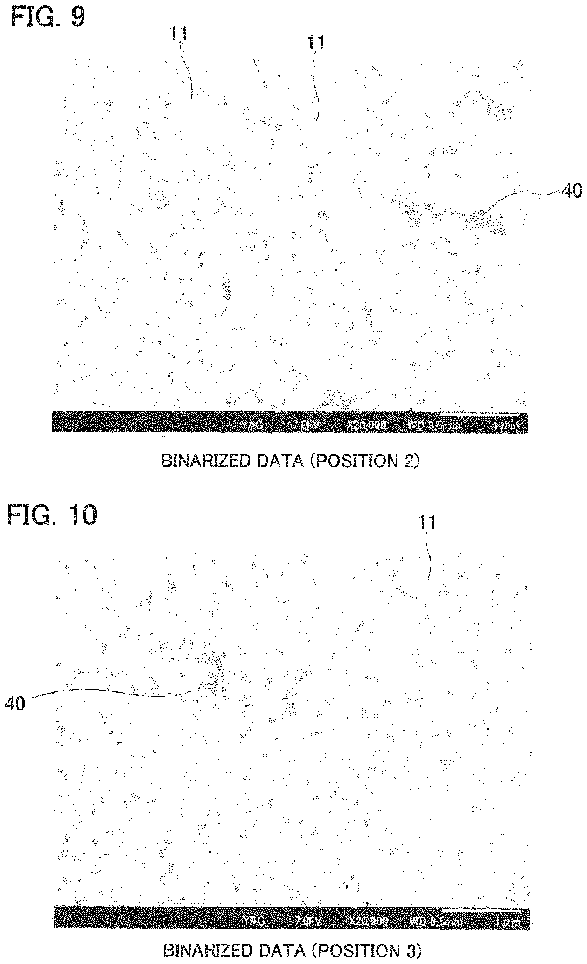

Next, by binarizing the SEM images of the three fields, the pore portions were clarified. The binarized images of the back-scattered electron images of Figs. 5 to 7 are illustrated in Figs. 8 to 10, respectively. Then, the area ratio of the pore portion was calculated from the binarized images, and the average value was taken as the porosity. Specifically, in Fig. 8, the area ratio of the pore portion at position 1 was 7.6%. In Fig. 9, the area ratio of the pore portion at position 2 was 8.7%. In Fig. 10, the area ratio of the pore portion at position 3 was 8.2%. Therefore, the porosity of the test sample produced this time was 8.2%, which is the average value of the area ratio of the pore portion at positions 1 to 3.

As described above, since the organic dye was present in a dispersed state inside the zinc oxide particles, the test sample of this example was red due to the organic dye. It is seen from Figs. 5 to 7 that the organic dye is present at grain boundaries of the zinc oxide particles. The porosity of the test sample is less than 10%, which indicates that the organic dye is prevented from contacting with air and water vapor, thus reducing oxidative deterioration.

### [Reference example]

### (Preparation of test sample)

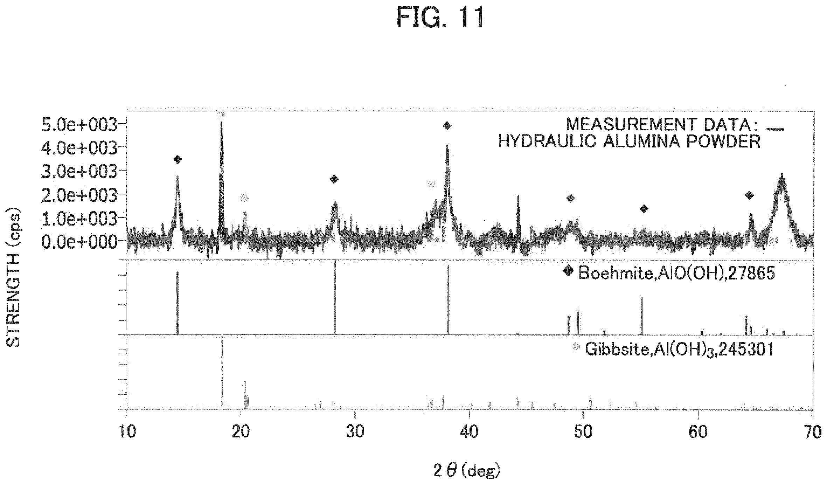

Hydraulic alumina BK-112 manufactured by SUMITOMO CHEMICAL COMPANY, LIMITED was prepared as the inorganic particles. Note that this hydraulic alumina has the central particle size of 16 µm. Fig. 11 illustrates the X-ray diffraction pattern of powder of the above-described hydraulic alumina and patterns of boehmite (AlOOH) and gibbsite (Al(OH)₃) registered in the ICSD. As illustrated in Fig. 11, it is seen that the hydraulic alumina is a mixture of boehmite and gibbsite. Although not illustrated in Fig. 11, the hydraulic alumina also includes ρ alumina.

Next, ion exchange water was weighed to be 80% by mass to the hydraulic alumina, and then the hydraulic alumina and the ion exchange water were mixed by using a mortar and pestle made of agate to obtain a mixture. Next, the mixture obtained was put into a cylindrical molding die (ϕ10) having an internal space. The test sample of the present example was obtained by heating and pressurizing the mixture under the condition of 50 MPa, 120 °C, and 20 minutes. The test sample of this example had a high hardness like a sintered body.

### (Evaluation of test sample)

### <X-ray diffraction measurement>

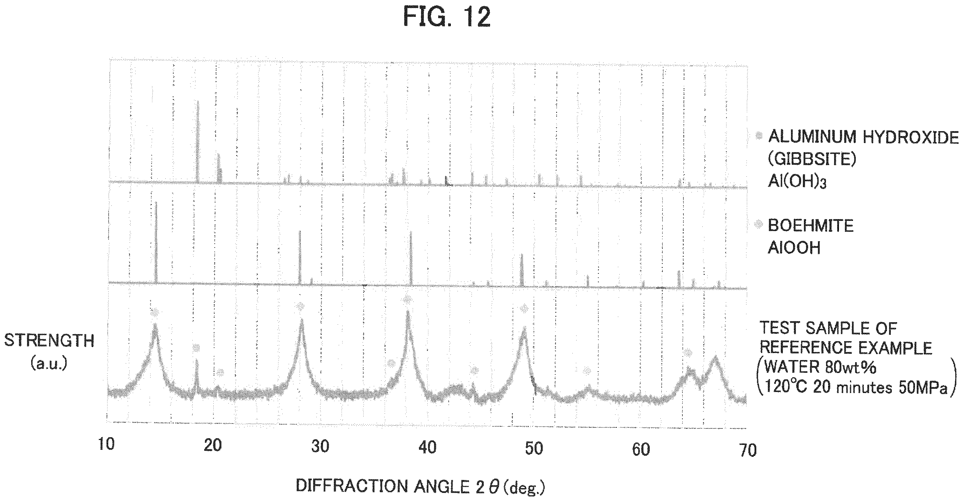

The X-ray diffraction pattern of the test sample of the reference example was measured using an X-ray diffraction apparatus. Fig. 12 illustrates the X-ray diffraction pattern of the test sample of reference example and X-ray diffraction patterns of boehmite and gibbsite registered in the ICSD. It is seen from Fig. 12 that the test sample of reference example is a structure mainly made from boehmite. Therefore, as illustrated in Figs. 11 and 12, it is seen that gibbsite (aluminum hydroxide), which is the raw material, changes to boehmite by a low-temperature sintering method.

Thus, it is seen that the matrix part 10 made from boehmite is obtained by the low-temperature sintering method. Therefore, by dispersing the organic dye 20 in the matrix part 10, the composite member 100 that is lightweight and excellent in chemical stability is obtained.

Although the contents of the present embodiment have been described above with reference to the examples and reference examples, it is obvious to those skilled in the art that the present embodiment is not limited to these descriptions and that various modifications and improvements are possible.

The entire contents of Japanese Patent Application No. 2019-059086 (filed on: March 26, 2019) are incorporated herein by reference.

### INDUSTRIAL APPLICABILITY

According to the present disclosure, there is provided a composite member that is stable for a long time when an organic dye is used and that is rich in color variations, and a construction member and a decoration member each using the composite member.

### REFERENCE SIGNS LIST

- 10: Matrix part
- 10a: Surface of matrix part
- 10b: Gap
- 11: Particles of inorganic substance
- 20: Organic dye
- 100: Composite member

## Claims

1. A composite member comprising:
a matrix part comprising an inorganic substance; and
an organic dye present in a dispersed state inside the matrix part,
wherein the composite member has a porosity of 20% or less in a section of the matrix part.

2. The composite member according to claim 1, wherein the organic dye is not continuously present from a surface of the matrix part to an inside of the matrix part, and the organic dye is not present in a film shape on the surface of the matrix part.

3. The composite member according to claim 1 or 2, wherein the matrix part has no gap communicating from a surface of the matrix part to an inside of the matrix part.

4. The composite member according to any one of claims 1 to 3, wherein the porosity in the section of the matrix part is 10% or less.

5. The composite member according to any one of claims 1 to 4, wherein the inorganic substance is an oxide.

6. The composite member according to any one of claims 1 to 5, wherein the inorganic substance is a polycrystalline substance.

7. The composite member according to any one of claims 1 to 6, wherein the matrix part comprises a particle group of the inorganic substance, and
the organic dye is present at grain boundaries of particles of the inorganic substance.

8. The composite member according to any one of claims 1 to 7, wherein the inorganic substance transmits visible light.

9. The composite member according to any one of claims 1 to 8, wherein the organic dye is a fluorescent dye.

10. A construction member, comprising:
the composite member according to any one of claims 1 to 9.

11. A decoration member, comprising:
the composite member according to any one of claims 1 to 9.
